# EUROPEAN PATENT SPECIFICATION

(11) **EP 0 516 886 B1**
(45) Date of publication and mention of the grant of the patent: **24.07.1996**
(21) Application number: 91201332.3
(22) Date of filing: 01.06.1991
(51) Int. Cl.: B60R 16/04, H01R 11/28

(54) **Vehicle battery cables**
Kraftfahrzeugbatteriekabel
Câbles pour battérie de véhicule

(43) Date of publication of application: 09.12.1992
(73) Proprietor: NEW HOLLAND U.K. LIMITED, Basildon, Essex SS14 3AD (GB)
(72) Inventor: Banks, Richard P., Maldon, Essex CM9 7RH (GB); Churchill, Stephen J., Basildon, Essex SS16 5QX (GB); Geary, Michael, Ashton-In-Makerfield, Wigan WN4 8LW (GB)
(74) Representative: Vandenbroucke, Alberic

(56) References cited:
- CH-A- 288 078
- GB-A- 478 013
- GB-A- 1 423 391
- US-A- 1 438 454
- US-A- 1 802 381
- US-A- 3 407 382
- US-A- 3 821 997

## Description

This invention relates to vehicle battery cables or leads and more particularly, to such cables which connect two or more batteries in parallel.

The invention has been conceived in connection with the battery requirement of an agricultural tractor and will, in the main, be discussed in relation thereto. However, it is to be noted that the invention is applicable to any vehicle which optionally may require two or more batteries.

As a rule, tractors are fitted with a single battery although occasionally, it is necessary to provide a second battery in parallel with the first, for example in tractors destined for northern countries in which very cold starting conditions may be experienced. Tractor operators also may find that, after initial usage, they may wish to upgrade their tractor from a single to a dual battery option. For such tractors, it is currently necessary to carry a second set of positive and negative battery cables and to substitute one for the other, as appropriate. This substitution entails disconnecting the existing cables from the battery terminals, which presents no difficulties, and also disconnecting the distal ends from the vehicle chassis connecting point and the starter motor, respectively, which is far more difficult from the standpoint of accessibility and which thus prolongs the time taken to accomplish the operation. It will also be appreciated that the need for a new set of cables for each additional battery employed is relatively costly. An example of one-piece battery cables for connecting two batteries in parallel is shown in US-A-3.821.997.

In the cab of an agricultural tractor there are numerous instruments and controls (known as "body electrics") which, in use, draw a relatively large current (compared to the instruments of an automobile, for example) and this can give rise to a corrosion problem at the positive battery pick-off point. Furthermore, this pick-off point is commonly on the starter motor and an electrical connection is made between the starter motor and one part of an electrical connector, to the other part of which connector are connected the body electrics. This connector not only suffers from the corrosion problem referred to but also gives rise to a voltage drop which is very undesirable. In GB-B-1.423.391, it therefore is proposed to provide said pick-off point on the split ring terminal for connecting the cable from the starter motor to the battery in a manner whereby one end of the lead to the body electrics is equiped with a threaded end portion cooperable with a nut providing the means to clamp the split ring terminal onto the associated terminal of the battery. It will be appreciated however that when removing the lead to the body electrics, other fastening or claping means will have to be provided for the split ring terminal.

It is therefore the object of the present invention to obviate one or more of the above disadvantages by providing a cabling system for a vehicle battery which is easily attachable and enables a second battery to be connected in parallel to a first battery in a convenient manner.

According to the present invention, a cabling system for vehicle battery means is provided comprising :
- a first cable for connecting one terminal of a first battery to a vehicle component; this first cable being fitted, at one end, with a first split ring terminal comprising a pair of spaced lugs extending from respective ends of the split ring and having concentric apertures therethrough to receive attachment means for drawing together said lugs so as, in use, to clamp the ring onto said one terminal of the first battery; and
- a second cable for connecting the other terminal of the first battery to an earthing point on the vehicle; said second cable being fitted, at one end, with a second split ring terminal similar to the first split ring terminal.

The cabling system is characterised in that it further comprises:
- a third cable for connecting said one terminal of the first battery to a corresponding terminal of a second battery; said third cable being provided, at one end, with a terminal in the form of a post insertable in at least one of said apertures in said lugs of the first ring terminal of the first cable and being cooperable with tightening means for, on the one hand, coupling said terminal post to said lugs thereby connecting the second cable to the first cable and, on the other hand, drawing together said lugs of said first split ring terminal so as, in use, to clamp the ring onto said one terminal of the first battery and, at the distal end, with a third split ring terminal similar to the first split ring terminal; and
- a fourth cable for connecting said other terminal of the first battery to a corresponding terminal of the second battery and fitted, at one end, with a second terminal post similar to the first terminal post of the third cable and cooperable with at least one of the apertures in the lugs of the second ring terminal of the second cable and, at the distal end, with a fourth split ring terminal similar to the second split ring terminal.

Thus, with the present invention, the first and second cables of the first battery remain unaltered when it is required to provide a second battery in parallel with the first battery. All that is required to this end is to remove the attachment means, for example a nut and bolt, from the lugs of the first and second ring terminals and to insert the respective post terminals of the third and fourth cables into the associated apertures in at least one lug of each pair of lugs of the first and second ring terminals and to insert screws or bolts, for example, through the other lugs of these pairs of lugs of the first and second ring terminals and to tighten the same so as to make a secure and good electrical connection between the first and third, respectively the second and fourth cables and to also make a secure and good electrical connection between the respective first and second split ring terminals and the associated battery terminals of the first battery. The third and fourth ring terminals then need to be applied to the positive and negative terminals, respectively, of the second battery by drawing together the lugs of the third and fourth ring terminals using nuts and bolts, or other attachment means. It will be appreciated that, should the second battery no longer be required, then it is an equally simple matter to remove the extension cables, namely the third and fourth cables. It will equally be appreciated that, should it be necessary to connect a third battery, then further third and fourth cables are all that are required.

According to a preferred feature of the present invention, at least one of the apertures of each pair of apertures in each set of lugs of the respective split ring terminals is tapered and the associated post terminals also are tapered accordingly so as, in use, to be drawn into the corresponding said tapered apertures by the tightening of the fastener means which may be in the form of screws or bolts which pass through the other apertures of said pairs of apertures in said sets of lugs and are insertable into threaded bores in the post terminals.

According to another preferred feature of the present invention, a third lug is provided on the first and third ring terminals to which lug can be attached termination means for electrical connections to other electrical components of the vehicle. Conveniently, the third lug is provided with a threaded aperture for receipt of a nut or screw. This third lug provides a very convenient connection point for body electrics, for example, thus obviating the problem with known connection points for body electrics in that the corrosion difficulties are minimised and there will be no voltage drop, provided there is a good electrical connection.

The first, second, third and fourth ring terminals may be provided with hollow spigots which receive the bared ends of the associated cables; electrical connection of these cables to the spigots being obtained by crimping the latter onto the former. Conveniently, similar spigots are provided in association with the terminal posts of the third and fourth cables; these too being crimped onto the bared ends of the associated cables.

An insulating sleeve is preferably provided over at least the major portion of the terminal post associated with the positive battery terminal and an insulating cover or boot is preferably provided over the positive terminals of the first battery and the second battery, if provided.

According to a second aspect of the invention, there is provided a split ring terminal for connecting a cable to a battery terminal; said split ring terminal comprising a pair of spaced lugs extending from respective ends of the split ring and having concentric apertures therethrough to receive attachment means for drawing together the lugs so as, in use, to clamp the ring onto a battery terminal; the aperture in at least one lug being tapered and said split ring terminal further also comprising a hollow spigot extending from the ring and being crimpable onto the bared end of a cable electrically to connect the terminal to the cable.

A cabling system for vehicle battery means will now be described in greater detail, by way of example, with reference to the accompanying drawings, in which :-
Figure 1 shows an agricultural tractor embodying the present invention,
Figure 2 is a perspective view, exploded in parts, of a cabling system in accordance with the present invention fitted to a pair of batteries,
Figure 3 is a view of a standard cable according to the present invention for connection to the positive terminal of a first battery of Figure 2,
Figure 4 shows a standard cable according to the present invention for connection to the negative terminal of said first battery of Figure 2,
Figure 5 shows an extension cable according to the present invention for interconnecting the positive terminals of the first and second batteries of Figure 2, and
Figure 6 shows an extension cable according to the present invention for interconnecting the negative terminals of the first and second batteries of Figure 2.

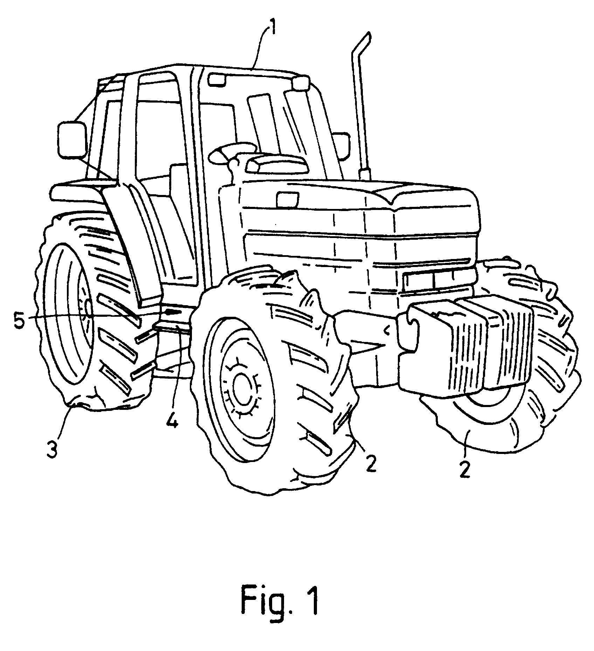

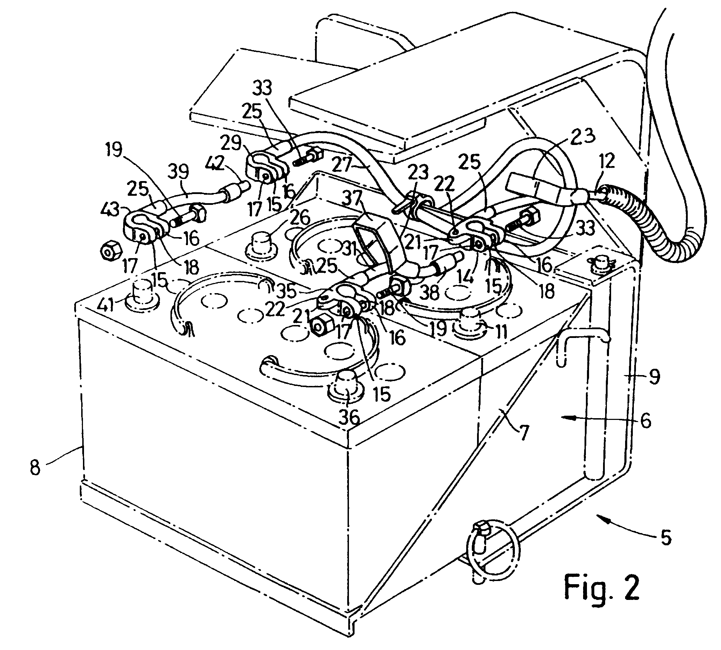

Referring first to Figure 1, the agricultural tractor comprises a framework on which is mounted a cab 1, a pair of front, steerable ground-engaging wheels 2 and a pair of driven, rear, ground-engaging wheels 3. Steps 4 are provided for the operator to assist in entering and leaving the cab 1 and behind these steps 4 is provided a battery compartment 5 which is shown in Figure 2 of the drawings to which reference is now made. The battery compartment 5 comprises a housing 6 which accommodates a first battery 7 and a second battery 8; the housing 6 being attached to a bracket 9 which in turn is attached to the framework of the tractor.

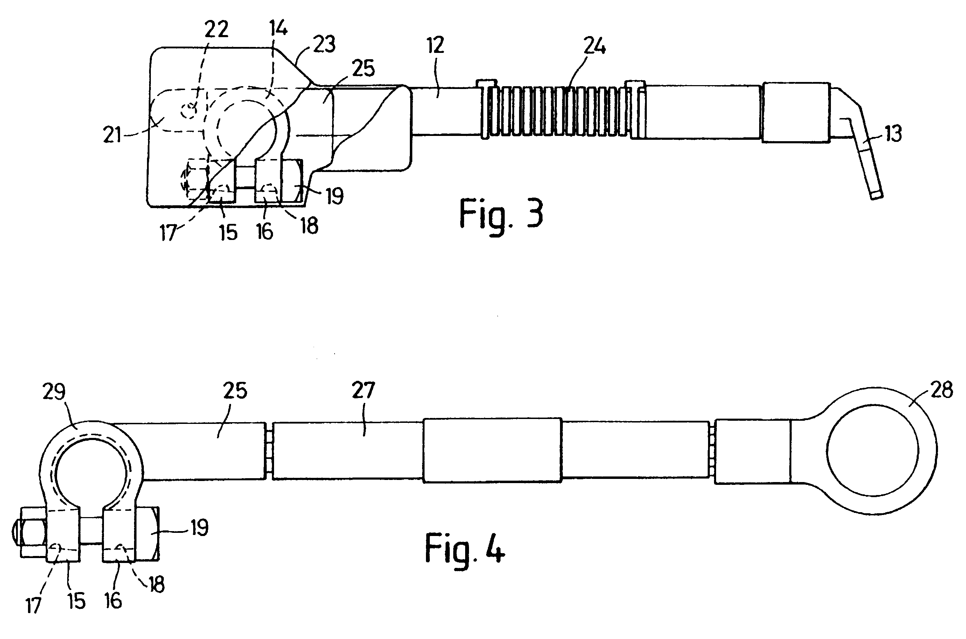

Referring now to Figures 3 and 4 in addition to Figure 2, the first battery 7 has its positive terminal 11 connected directly to an electrical component of the tractor, namely the conventional starter motor for the engine (not shown), by a first cable 12 fitted, at one end, with a spade-type terminal 13 for connection to said starter motor in a conventional manner. The other end of the first cable 12 is fitted with a first split ring terminal 14 having a pair of lugs 15,16 extending from the respective ends of the ring and provided with concentric apertures 17,18, respectively, which receive a nut and bolt 19 which, when tightened, draws the lugs 15 and 16 together so as to tighten the ring on the terminal post 11. Preferably, only the aperture 17 in the lug 15 is tapered towards the second lug 16 for a reason to be described. However, alternatively, the apertures 17 and 18 in the lugs 15 and 16 of the split ring terminal 14 both may be tapered in the same direction. The terminal post 11 and the interior of the ring terminal 14 are also tapered as is conventional; this also being the case with all the other battery terminal posts and split ring terminals to be described.

The first ring terminal 14 is provided with a further lug 21 which has a threaded through hole 22 to which body electrics can be connected and is provided with a protective boot or cover 23. The first ring terminal 14 is also provided with a spigot 25 which receives the bared end of the cable 12, the spigot 25 being crimped onto the cable 12 to provide a good and secure electrical connection. The body of the cable 12 is disposed within a tube 24, part of which is convoluted or of concertina form which helps to protect the cable 12 and to assist in the routing thereof from the first battery 7 to the starter motor which is remote therefrom.

Turning now to Figures 2 and 4, a cable for connecting the negative terminal 26 of the first battery 7 to the chassis or framework of the tractor is indicated at 27 and comprises, at one end, a full ring terminal 28 for connection to the tractor framework or chassis to provide a good ground or earth connection. The other end of the cable 27 is fitted with a split ring terminal 29 which is similar, in all respects, to the split ring terminal 14 of cable 12, except that there is no further lug 21 provided; this being unnecessary because the body electrics are earthed at a different point.

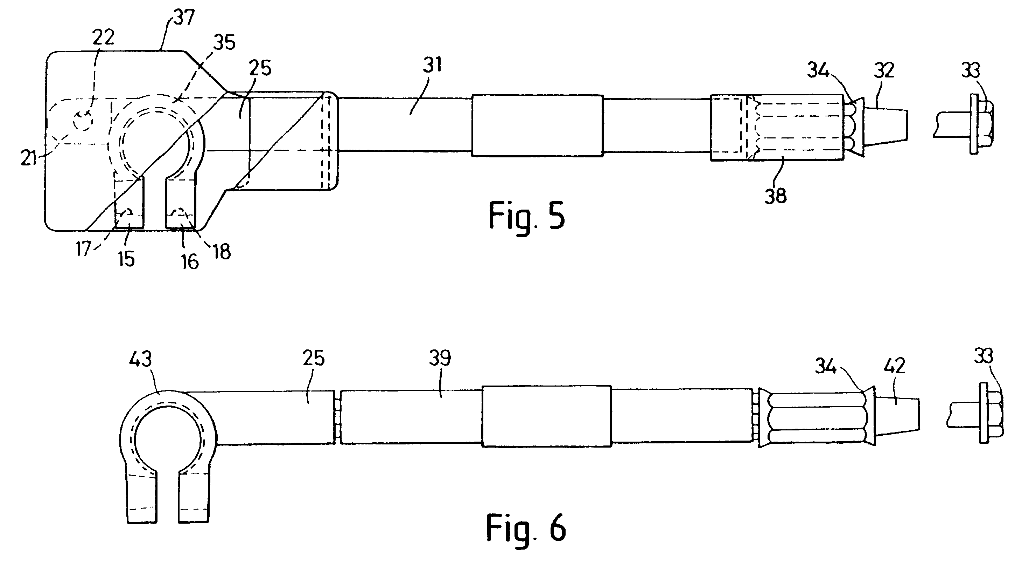

The cabling system thus far described enables the use of a single battery for the tractor but, when the second battery 8 is required which is to be connected in parallel with the first battery 7, extension cables are provided; the positive extension cable being shown in Figure 5 of the drawings and indicated at 31. This extension cable 31 is fitted, at one end, with a tapered terminal post 32 which itself is provided, from its outer end, with an internally threaded axial aperture which receives a bolt 33. The other end of the tapered post 32 is provided with a hollow spigot 34 which receives the bared end of the cable 31; the spigot 34 being crimped thereon to provide a good and secure electrical connection.

The other end of the cable 31 is fitted with a split ring terminal 35 which may be similar, in all respects, to the split ring terminal 14 of the cable 12 although it is not necessary for this second split ring terminal 35 to also have a third lug 21 with a tapped bore therein. To connect the positive terminal 36 of the second battery 8 to the positive terminal 11 of the first battery 7, the nut and bolt 19 are first removed from the split ring terminal 14 of the cable 12 and the tapered terminal post 32 of the cable 31 is inserted into the tapered aperture 17 of the lug 15 of the split ring terminal 14. A bolt 33 is then passed through the lug 16 of the split ring terminal 14 and tightened so as to draw the tapered terminal post 32 into the tapered aperture 17 to make a good and secure electrical connection therebetween. The split ring terminal 35 of the cable 31 is then connected to the positive terminal 36 of the second battery 8, for example, using the nut and bolt 19 removed from the split ring terminal 14. The extension cable 31 is provided at the split ring terminal end with a boot 37 similar to the boot 23 and an insulating sleeve 38 is provided at the other end so as to protect at least a major part of the tapered terminal post 32.

While, in the preferred embodiment, a bolt 33 is inserted in an axial, threaded aperture in the tapered terminal post 32 for making a good and secure electrical connection between the standard cable 12 and the extension cable 31, it will be appreciated that, in an alternative arrangement, the same quality connection can be made by means of a threaded, axial extension provided at the free end of the tapered terminal post 32 and which is disposed to extend through the aperture 18 in the lug 16 and to receive a nut at its outer end in a manner to permit drawing the tapered terminal post 32 into the aperture 17 in the lug 15 and thus to make a good electrical connection therebetween and further also to draw the other lug 16 towards said lug 15 to thereby tighten the ring on the terminal post 11 of battery 7 and thus also to make a good and secure electrical connection between the cable 12 and this terminal 11 of said battery 7.

Alternatively, the terminal post 32 also may be fully cylindrical in shape with a collar at its end facing the cable 31 and disposed to engage the lug 15 of the split ring terminal 14 after insertion of said post 32 in the aperture 17 therein. Further, as in the preferred embodiment, a bolt 33 may be passed through the other lug 16 of this split ring terminal 14 and inserted in a threaded bore in said terminal post 32; said bolt 33, when tightened, being effective not only to make a good and secure electrical coupling between the first and second cables 12 and 31 but also to draw the lugs 15 and 16 together so as to tighten the ring of the split ring terminal 14 on the battery terminal 11.

An extension cable 39 for connecting the negative terminal 26 of the first battery 7 to the negative terminal 41 of the second battery 8 is shown in Figure 6 of the drawings and this cable 39 is provided at one end with a tapered terminal post 42 similar to that of the positive extension cable 31. The other end of the cable 39 is fitted with a split ring terminal 43 similar to the split ring terminal 29 of the cable 27. To fit this negative extension cable 39, the procedure is similar to that described in connection with the positive extension cable 31.

It will thus be seen that, to connect a second battery and indeed, further batteries if required, involves only a very simple procedure which does not disturb the basic positive and negative cables to the first battery and thus avoids the problems of gaining access to the starter motor terminal and earth point to release the existing cables and then to connect new cables which, at least as regards the positive cable, would involve routing that cable to follow the same path as the cable being replaced. As will be seen, all of the assembly of the extension cables 31 and 39 take place in the battery compartment itself which is readily accessible.

Thus, for an optional second battery to be fitted, it is no longer necessary, as used to be the case, to dispose of the existing battery cables associated with the single battery option. In other words, all vehicles (tractors) use standard cables regardless of whether dual batteries are required. In addition thereto, a reliable point for connection of the body electrical feed is provided which furthermore guarantees a minimum volt drop.

In summary, the present invention allows the operator to upgrade his vehicle from the single to the dual battery option at a minimum expense in labour and materials. Furthermore, for reasons which will readily be apparent, the present invention also is advantageous for the manufacturer and dealer of such vehicles.

## Claims

1. A cabling system for vehicle battery means comprising :
- a first cable (12) for connecting one terminal (11) of a first battery (7) to a vehicle component; this first cable (12) being fitted, at one end, with a first split ring terminal (14) comprising a pair of spaced lugs (15,16) extending from respective ends of the split ring and having concentric apertures (17,18) therethrough to receive attachment means (19) for drawing together said lugs (15,16) so as, in use, to clamp the ring onto said one terminal (11) of the first battery (7); and
- a second cable (27) for connecting the other terminal (26) of the first battery (7) to an earthing point on the vehicle; said second cable (27) being fitted, at one end, with a second split ring terminal (29) similar to the first split ring terminal (14); and
characterised in that the cabling system further comprises:
- a third cable (31) for connecting said one terminal (11) of the first battery (7) to a corresponding terminal (36) of a second battery (8); said third cable (31) being provided, at one end, with a terminal in the form of a post (32) insertable in at least one of said apertures (17,18) in said lugs (15,16) of the first ring terminal (14) of the first cable (12) and being cooperable with tightening means (33) for, on the one hand, coupling said terminal post (32) to said lugs (15,16) thereby connecting the second cable (31) to the first cable (12) and, on the other hand, drawing together said lugs (15,16) of said first split ring terminal (14) so as, in use, to clamp the ring (14) onto said one terminal (11) of the first battery (7) and, at the distal end, with a third split ring terminal (35) similar to the first split ring terminal (14); and
- a fourth cable (39) for connecting said other terminal (26) of the first battery (7) to a corresponding terminal (41) of the second battery (8) and fitted, at one end, with a second terminal post (42) similar to the first terminal post (32) of the third cable (31) and cooperable with at least one of the apertures (17,18) in the lugs (15,16) of the second ring terminal (29) of the second cable (27) and, at the distal end, with a fourth split ring terminal (43) similar to the second split ring terminal (29).

2. A system according to claim 1, characterised in that the aperture (17) in at least one of the lugs (15) of the first and second split ring terminals (14,29) is tapered and the first and second terminal posts (32,42) of the third and fourth cables (31,39) are correspondingly tapered; the arrangement being such that, in use, the tightening means (33) are operable to draw said tapered terminal posts (32,42) in the associated tapered apertures (17).

3. A system according to claim 1 or 2, characterised in that the tightening means comprise a threaded bore coaxially in each of the first and second terminal posts (32,42) of the third and fourth cables (31,39) and bolt means (33) insertable in each of the threaded bores; said terminal posts (32,42) and said bolt means (33) being cooperable with the corresponding lugs (15,16) of the first and second split ring terminals (14,29) of the first and second cables (12,27) to connect said terminal posts (32,42) to said corresponding first and second split ring terminals (14,29) of said first and second cables (12,27).

4. A system according to any of the claims 1 to 3, characterised in that a third lug (21) is provided on at least the first ring terminal (14) for attachment thereto of termination means for electrical connections to other electrical components of the vehicle.

5. A system according to claim 4, characterised in that the third lug (21) is provided with a threaded aperture (22).

6. A system according to any of the preceding claims, characterised in that each of the first, second, third and fourth ring terminals (14,29,35,43) is provided with a hollow spigot (25) which receives the bared end of the associated cable (12,27,31,39); electrical connection of each cable (12,27,31,39) to the associated spigot (25) being obtained by crimping the latter on to the former.

7. A system according to any of the preceding claims, characterised in that each of the terminal posts (32,42) of the third and fourth cables (31,39) has associated with it a hollow spigot; electrical connection of each cable (31,39) to the associated spigot being obtained by crimping the latter on to the former.

8. A system according to any of the preceding claims, characterised in that the split ring terminal (14,29,35,43) carries :
- a pair of spaced lugs (15,16) extending from respective ends of the split ring and having concentric apertures (17,18) therethrough to receive attachment means (19) for drawing together the lugs (15, 16) so as, in use, to clamp the ring onto a battery terminal (11,26,36,41) and
- a hollow spigot (25) extending from the ring and which is crimpable onto the bared end of a cable (12,27,31,39) for electrically connecting the latter to the terminal (14,29,35,43).

9. A system according to claim 8, characterised in that the aperture (17) in at least one lug (15) is tapered.

10. A system according to claim 8 or 9, characterised in that it further also comprises a third lug (21) to which termination means for electrical connections can be attached.

## Patentansprüche

1. Verkabelungssystem für Kraftfahrzeug-Batterieeinrichtungen mit:
- einem ersten Kabel (12) zum Verbinden eines Pols (11) einer ersten Batterie (7) mit einem Fahrzeugbauteil, wobei dieses erste Kabel (12) an einem Ende mit einer ersten gespaltenen Polringklemme (14) versehen ist, die zwei mit Abstand voneinander angeordnete Laschen (15, 16) aufweist, die sich von jeweiligen Enden der gespaltenen Polringklemme aus erstrecken und sich durch sie hindurcherstreckende konzentrische Öffnungen (17, 18) zur Aufnahme von Befestigungsmitteln (19) zum Zusammenziehen der Laschen (15, 16) aufweisen, um im Gebrauch die Polringklemme auf dem einen Pol (11) der ersten Batterie (7) festzuklemmen, und
- einem zweiten Kabel (27) zum Verbinden des anderen Pols (26) der ersten Batterie (7) mit einem Massepunkt an dem Fahrzeug, wobei das zweite Kabel (27) an einem Ende mit einer zweiten gespaltenen Polringklemme (29) ähnlich der ersten gespaltenen Polringklemme (14) versehen ist,
dadurch gekennzeichnet, daß das Verkabelungssystem weiterhin folgende Teile umfaßt:
- ein drittes Kabel (31) zum Verbinden des einen Pols (11) der ersten Batterie (7) mit einem entsprechenden Pol (36), einer Zweiten Batterie (8), wobei das dritte Kabel (31) an einem Ende mit einem Anschluß in Form eines Bolzens (32) versehen ist, der in zumindestens eine der Öffnungen (17, 18) in den Laschen (15, 16) der ersten Polringklemme (14) des ersten Kabels (12) einsetzbar ist und mit Festzieheinrichtungen (33) zusammenwirken kann, um einerseits den Anschlußbolzen (32) mit den Laschen (15, 16) zu verbinden, wodurch das zweite Kabel (31) mit dem ersten Kabel (12) verbunden wird, und um andererseits die Laschen (15, 16) der ersten gespaltenen Polringklemme (14) zusammenzuziehen, um so im Gebrauch die Polringklemme (14) auf dem einen Pol (11) der ersten Batterie (7) festzuklemmen, wobei das dritte Kabel (31) am entfernten Ende mit einer dritten gespaltenen Polringklemme (35) ähnlich der ersten gespaltenen Polringklemme (14) versehen ist, und
- ein viertes Kabel zum Verbinden des anderen Pols der ersten Batterie (7) mit einem entsprechenden Pol (41) der zweiten Batterie (8), wobei das vierte Kabel an einem Ende mit einem zweiten Anschlußbolzen (42) ähnlich dem ersten Anschlußbolzen (32) des dritten Kabels (31) versehen ist, der mit zumindestens einer der Öffnungen (17, 18) in den Laschen (15, 16) der zweiten Polringklemme (29) des zweiten Kabels (27) zusammenwirken kann, wobei das vierte Kabel an seinem entfernten Ende mit einer vierten gespaltenen Polringklemme (43) ähnlich der zweiten gespaltenen Polringklemme (29) versehen ist.

2. System nach Anspruch 1,
dadurch gekennzeichnet, daß die Öffnung (17) in zumindestens einer der Laschen (15) der ersten und zweiten gespaltenen Polringklemmen (14, 29) verjüngt ist, und daß die ersten und zweiten Anschlußbolzen (32, 34) der dritten und vierten Kabel (31, 39) entsprechend verjüngt sind, wobei die Anordnung derart ist, daß im Gebrauch die Festzieheinrichtungen (33) betreibbar sind, um die verjüngten Anschlußbolzen (32, 42) in die zugehörigen verjüngten Öffnungen (17) hineinzuziehen.

3. System nach Anspruch 1 oder 2,
dadurch gekennzeichnet, daß die Festzieheinrichtungen eine Gewindebohrung koaxial in jedem der ersten und zweiten Anschlußbolzen (32, 42) der dritten und vierten Kabel (31, 39) und Schraubeneinrichtungen (33) umfassen, die in jede der Gewindebohrungen einsetzbar sind, wobei die Anschlußbolzen (32, 42) und die Schrauben (33) mit den entsprechenden Laschen (15, 16) der ersten und zweiten gespaltenen Polringklemmen (14, 29) der ersten und zweiten Kabel (12, 27) zusammenwirken können, um die Anschlußbolzen (32, 42) mit den entsprechenden ersten und zweiten gespaltenen Polringklemmen (14, 29) der ersten und zweiten Kabel (12, 27) zu verbinden.

4. System nach einem der Ansprüche 1 bis 3,
dadurch gekennzeichnet, daß eine dritte Lasche (21) an zumindestens der ersten Polringklemme (14) vorgesehen ist, um daran Anschlußeinrichtungen für elektrische Verbindungen zu anderen elektrischen Bauteilen des Fahrzeuges anzuschließen.

5. System nach Anspruch 4,
dadurch gekennzeichnet, daß die dritte Lasche (21) mit einer Gewindebohrung (22) versehen ist.

6. System nach einem der vorhergehenden Ansprüche,
dadurch gekennzeichnet, daß jede der ersten, zweiten, dritten und vierten Polringklemmen (14, 29, 35, 43) mit einer hohlen Muffe (25) versehen ist, die das abisolierte Ende des zugehörigen Kabels (12, 27, 31, 39) aufnimmt, und daß eine elektrische Verbindung jedes Kabels (12, 27, 31, 39) mit der zugehörigen Muffe (25) durch deren Aufquetschen auf das Kabel erzielt wird.

7. System nach einem der vorhergehenden Ansprüche,
dadurch gekennzeichnet, daß jedem der Anschlußbolzen (32, 42) der dritten und vierten Kabel (31, 39) eine hohle Muffe zugeordnet ist, und daß die elektrische Verbindung jedes Kabels (31, 39) mit der zugehörigen Muffe durch deren Aufquetschen auf das Kabel erzielt wird.

8. System nach einem der vorhergehenden Ansprüche,
dadurch gekennzeichnet, daß die gespaltene Polringklemme (14, 29, 35, 43):
- zwei mit Abstand voneinander angeordnete Laschen (15, 16), die sich von jeweiligen Enden des gespaltenen Polringes erstrecken und sich durch die Laschen hindurcherstreckende konzentrische Öffnungen (17, 18) zur Aufnahme von Befestigungsmitteln (19) zum Zusammenziehen der Laschen (15, 16) aufweisen, um im Gebrauch den Polring auf den Batteriepol (11, 26, 36, 41) festzuziehen, und
- eine hohle Muffe (25) trägt, die sich von dem Polring aus erstreckt und die auf das abisolierte Ende eines Kabels (12, 27, 31, 39) aufquetschbar ist, um das Kabel mit der Polringklemme (14, 29, 35, 43) zu verbinden.

9. System nach Anspruch 8,
dadurch gekennzeichnet, daß die Öffnung (17) in zumindestens einer Lasche (15) verjüngt ist.

10. System nach Anspruch 8 oder 9, dadurch gekennzeichnet,
daß es weiterhin eine dritte Lasche (21) aufweist, an der Anschlußeinrichtungen für elektrische Verbindungen befestigbar sind.

## Revendications

1. Système de câblage pour équipement en batteries de véhicules comprenant:
- un premier câble (12) pour connecter une cosse (11) d'une première batterie (7) à un élément de véhicule; ce premier câble étant équipé, à l'une de ses extrémités, d'une première cosse à bague fendue (14) comprenant une paire de pattes espacées (15,16) qui s'étendent depuis les extrémités respectives de la bague fendue et comportent des ouvertures concentriques (17,18) destinées à recevoir des moyens de fixation (19) pour rapprocher lesdites pattes (15,16) de manière, en cours d'utilisation, à serrer la bague sur ladite cosse (11) de la première batterie (7); et
- un deuxième câble (27) pour connecter l'autre cosse (26) de la première batterie (7) à un point de mise à la terre sur le véhicule; ledit deuxième câble (27) étant équipé, à une extrémité, d'une deuxième cosse à bague fendue (29) similaire à la première cosse à bague fendue (14), et
caractérisé en ce que le système de câblage comprend en outre :
- un troisième câble (31) pour connecter ladite cosse (11) de la première batterie (7) à une cosse correspondante (36) d'une deuxième batterie (8), ledit troisième câble (31) étant équipé, à une extrémité, d'une cosse sous la forme (32) d'une borne insérable dans au moins l'une desdites ouvertures (17,18) dans lesdites pattes (15,16) de la première cosse à bague (14) du premier câble (12) et étant associable avec des moyens de fixation (33) pour, d'une part, coupler ladite borne auxdites pattes (15,16), reliant ainsi le deuxième câble (31) au premier câble (12) et, d'autre part, rapprocher lesdites pattes de ladite première cosse à bague fendue (14) de manière, en cours d'utilisation, à serrer la bague (14) sur ladite cosse (11) de la première batterie (7) et, l'extrémité distante, avec une troisième cosse à bague fendue (35) similaire à la première cosse à bague fendue (14); et
- un quatrième câble (39) pour connecter ladite autre cosse (26) de la première batterie (7) à une cosse correspondante (41) de la deuxième batterie (8) et équipé, à une extrémité, d'une deuxième borne (42) similaire à la première borne (32) du troisième câble (31) et associable avec au moins l'une des ouvertures (17,18) dans les pattes (15,16) de la deuxième cosse à bague (29) du deuxième câble (27), et, à l'extrémité distante, avec une quatrième cosse à bague fendue (43) similaire à la deuxième cosse à bague fendue (29).

2. Un système selon la revendication 1, caractérisé en ce que l'ouverture (17) dans une au moins des pattes (15) de la première et de la deuxième cosses à bague fendue (14,29) est conique et que les première et deuxième bornes (32,42) des troisième et quatrième câbles (31,39) sont coniques de manière correspondante, la disposition étant telle qu'en cours d'utilisation, les moyens de serrage (33) sont utilisables pour introduire lesdites bornes coniques (32,42) dans les ouvertures coniques associées (17).

3. Système selon la revendication 1 ou 2, caractérisé en ce que les moyens de serrage comportent un alésage fileté coaxialement dans chacune des première et deuxième bornes (32,42) des troisième et quatrième câbles (31,39) et des boulons (33) insérables dans chacun des alésages filetés; lesdites bornes (32,42) et lesdits boulons (33) étant associables avec les pattes correspondantes (15,16) des première et deuxième cosses à bague fendue (14,29) des premier et deuxième câbles (12,27) pour connecter lesdites bornes (32,42) auxdites première et deuxième cosses à bague fendue (14,29) desdits premier et deuxième câbles (12,27).

4. Système selon l'une quelconque des revendications 1 à 3, caractérisé en ce qu'une troisième patte (21) est prévue sur au moins la première cosse à bague (14) pour la fixation sur celle-ci de moyens de terminaison pour des connexions électriques à d'autres éléments électriques du véhicule.

5. Système selon la revendication 4, caractérisé en ce que la troisième patte (21) est dotée d'une ouverture filetée (22).

6. Système selon l'une quelconque des revendications qui précèdent, caractérisé en ce que chacune des première, deuxième, troisième et quatrième cosses à bague (14,29,35,43) est dotée d'une queue creuse (25) qui reçoit l'extrémité dénudée du câble associé (12,27,31,39); la connexion électrique de chaque câble (12,27,31,39) à la queue associée (25) étant obtenue en sertissant la dernière nommée sur la première.

7. Système selon une quelconque des revendications qui précèdent, caractérisé en ce que chacune des bornes (32,42) des troisième et quatrième câbles (31,39) est associée à une queue creuse; la connexion électrique de chaque câble (31,39) à la queue associée étant obtenue en sertissant la dernière nommée sur la première.

8. Système selon l'une quelconque des revendications qui précèdent, caractérisé en ce que la cosse à bague fendue (14,29,35,43) porte :
- une paire de pattes espacées (15,16) sortant des extrémités respectives de la bague fendue et comportant des ouvertures concentriques (17,18) afin de recevoir des moyens de fixation (19) pour rapprocher les pattes (15, 16) de manière, en cours d'utilisation, à serrer la bague sur une cosse de batterie (11,26,36,41) et
- une queue creuse (25) sortant de la bague et sertissable sur l'extrémité dénudée d'un câble (12,27,31,39) pour la connexion électrique du dernier nommé à la cosse (14,29,35,43).

9. Système selon la revendication 8, caractérisé en ce que l'ouverture (17) dans au moins une patte (15) est conique.

10. Système selon la revendication 8 ou 9, caractérisé en ce qu'il comporte également une troisième patte (21) à laquelle peuvent être fixés des moyens de terminaison pour des connexions électriques.
